# EUROPEAN PATENT SPECIFICATION

(11) **EP 2 556 805 B1**
(45) Date of publication and mention of the grant of the patent: **17.12.2014**
(21) Application number: 12005828.4
(22) Date of filing: 10.08.2012
(51) Int. Cl.: A61C 8/00, A61C 13/20

(54) **Root cap with a removable keeper tray having an opening**
Wurzelkappe mit einem herausnehmbares Einsatz mit einer Öffnung
Bouchon de racine avec une gâche amovible possédant une ouverture

(30) Priority: 10.08.2011 JP 2011175076; 16.12.2011 JP 2011275987
(43) Date of publication of application: 13.02.2013
(73) Proprietor: GC Corporation, Tokyo 113-0033 (JP)
(72) Inventor: Sato, Yuji, Higashihiroshima-shi Hiroshima (JP); Takeuchi, Sawako, Tokyo (JP); Hasegawa, Mikage, Tokyo (JP)
(74) Representative: Müller-Boré & Partner Patentanwälte PartG mbB

(56) References cited:
- EP-A1- 0 719 524
- JP-A- 7 136 188
- JP-A- 11 137 575
- JP-A- 2000 316 885
- JP-B2- 3 562 739

## Description

The present invention relates to a keeper tray corresponding to a removable keeper. The keeper tray corresponding to a removable keeper is used at a time of casting of a root cap to be fixed on an anchor tooth in an alveolar ridge portion. On the root cap, a keeper is adherently fixed. The keeper is arranged at a position corresponding to a permanent magnetic structure fixed to a removable denture, such as a complete denture, a partial denture, or the like, which uses a dental magnetic attachment.

As a method for holding a complete or partial denture in an oral cavity, a method utilizing magnetic attractive force between a permanent magnet structure made of a permanent magnet covered surrounding and a keeper made of a soft magnetic material, which constitute a dental magnetic attachment, has been adopted. More specifically, in this method, a leg part of the root cap provided with a keeper in the intraoral side is fixedly provided at the root canal formation part of a residual tooth, which becomes an anchor tooth of the alveolar ridge portion in an oral cavity. Further, the permanent magnetic structure is fixedly provided at a position, which is in the alveolar ridge side and opposite to the keeper on the root cap. With this constitution, the method can hold a denture by utilizing the magnetic attractive force between the keeper on the root cap and the permanent magnetic structure. This method enables it easy to attach/detach the denture in an oral cavity with an excellent cleanability and without impairing any functions and aesthetics of the denture.

However, since the keeper is made of soft magnetic stainless steel, at a time of diagnosis of magnetic resonance imaging (MRI), it has been known that the keeper disturbs the images around thereof. Therefore, when the MRI diagnosis is necessary in emergency, the method, in which only the keeper is broken and removed by an air turbine or the like, and a new keeper is re-adhered after MRI diagnosis, have been carried out. However, since the stainless steel is broken in an oral cavity by the air turbine, the removing of the keeper by breaking not only imposes a heavy burden on both an operator and a patient, but also there has been an economical problem.

For solving such problems, Japanese Patent Application Laid-Open No. H11-137575 proposes, in the paragraph No. 0035, a root cap for attaching the keeper in which an inner peripheral size of a space (cavity portion) provided in the metal root cap is set to be lager than an outer peripheral size of the keeper. The keeper is adhered in the space (cavity portion) by an adhesive, such as a dental metal adhesive resin or dental cement, or the like.

When such a root cap is used, for removing the keeper, the adhesive part between the side surface of the keeper and the space (cavity portion) in the root cap must be grinded out. However, since the adhesive on the back surface of the keeper cannot be ground, it is necessary to insert a thin rod tool into the narrow gap formed between the side surface of the keeper and the space of the root cap in which the adhesive is grinded out, and puncture out the keeper in which the back surface is adhered. In such a case, the edge of the space (cavity portion) of the root cap in which the keeper is adhered may be damaged. If the edge is damaged, at the time of attaching the new keeper after the MRI diagnosis, the attached keeper may be dropped out since the adhesive strength is not enough. Therefore, even when such a root cap is used, the keeper has been eventually broken and removed by the air turbine, or the like.

Further, to such a problem, Yuki Abe and Mikage Hasegawa proposes a root cap having a spillway (an insertion path for inserting a removing tool), which can be detached/re-attached without damaging the root cap and the keeper in a non-patent document (refer to, for example, Yuki Abe, Mikage Hasegawa, and other 6 persons, "Discussion of a detaching method of KB method keeper for countermeasures of MRI and keeper retentive force by cement", Abstract of 19thAcademic Conference of Japan magnetic dental society, p.20, November 14, 2009). In this root cap, the spillway is formed from the side surface of the root cap to the back surface of the keeper. By inserting the removing tool into the spillway and pushing up the keeper from the back surface side, the keeper can be removed without damaging the root cap and the keeper.

In addition, in this root cap, a user needs to select and form the position of the spillway, according to cases of patients.

Further, as a root cap enabling a keeper to attach/detach more certainly and easily, Japanese Patent No. 3586287 discloses a root cap (root member) in which, for detachably fixing a keeper (holding plate) to a space (concave portion), the side surface of the space (concave portion) has an opening. The keeper (holding plate) has a taper shape inclining from an entrance of the opening to an inner portion and an outer shape complementary to the space (concave portion). By inserting the keeper (holding plate) into the space (concave portion) and pushing, the keeper (holding plate) is fixed in the space (concave portion). As the other case, the keeper (holding plate) is fixed in the space (concave portion) by a screw. Further, the keeper (holding plate) has a projection and the space (concave portion) has a cutout portion. By engaging the projection with the cutout portion and adhering with resins, the keeper (holding plate) is fixed in the space (concave portion).

This root cap includes a means for detachably fixing the keeper and the main object is to provide only the detachable method of the holding plate (keeper). Thus, the holding plate (keeper) and the space (concave portion) have very special shapes and sufficient magnetic attractive force is hardly obtained, so that there may be a trouble in an ordinary use as a dental magnetic attachment.

The present invention is directed to provide a keeper tray corresponding to a removable keeper. The keeper tray can easily cast a root cap by a lost wax method. The root cap can attach a keeper having conventional shapes and does not impair the magnetic attractive force. When the keeper is removed at a time of the MRI diagnosis, the edge of the space of a root cap, on which the keeper is attached, is not damaged. The root cap can easily remove the keeper and easily attach the keeper after the MRI diagnosis.

Present inventors carried out earnest works to solve the aforementioned problems and, as a result, they found out the followings to complete the present invention. That is, when a keeper having a conventional shape is certainly fixed to the space formed in the intraoral side of the root cap by an adhesive, or the like, an edge of the space for inserting the keeper formed on the root cap may be damaged, at a time of MRI diagnosis. However, if an insertion path for inserting a thin rod-shaped tool is secured on the side of the root cap, an operator inserts the thin rod-shaped tool on the back surface side of the keeper and lifts up the keeper from the back surface side of the keeper, so that the operator can remove the keeper from the root cap. Further, for forming such an insertion path in the root cap, a wax model is formed in a state in which a plate-shaped mold or the like is inserted beforehand from the side of the wax model of the root cap so as to be in parallel to the back surface of the keeper. Then, the plate-shaped mold or the like is pulled out, so that the wax model of the root cap having the insertion path on the side thereof can be made. From this wax model, the root cap having the insertion path on the side can be casted.

However, there is a problem that it is very difficult to form the insertion path so as to make the thin rod-shaped tool to exactly contact the back surface of the keeper.

Then, for solving this problem, at first, an opening is formed on the back surface of the keeper tray corresponding to a removable keeper, where the opening is cut out from the outer peripheral portion of a keeper tray to the center portion with a predetermined width and opens to the space. Then, a state, in which the upper surface of the plate-shaped mold and the inner surface of the bottom surface of the keeper tray corresponding to a removable keeper are flushed, is made at the opening of the keeper tray corresponding to the removable keeper. In this state, the keeper tray corresponding to the removable keeper, which includes the plate-shaped mold, is putted on a setting position of the keeper on the wax piled on the gypsum model. Further, wax is piled more on the keeper tray corresponding to the removable keeper, so that the wax model of the root cap is formed. With this processing, the root cap can be easily produced, where the back surface of the keeper is exactly positioned to the upper surface of the insertion path.

Further, the keeper tray corresponding to the removable keeper, which is constituted with the bottom surface and an outer wall portion stood on the outer periphery of the bottom surface, has a relatively small size similar to the keeper. For forming an opening at the bottom surface of the keeper tray, for example, a dish-shaped tray, which has no opening and is easily molded, is produced and then, only the bottom surface of the tray is cut out, avoiding the outer wall portion stood on the outer periphery of the bottom surface. If the outer wall portion, which becomes an obstacle to cut out the bottom surface, is also cut out together, the opening is easily formed on the bottom surface. That is, an outer wall opening can be formed by continuously cutting out from the end portion of the opening on the outer peripheral portion side of the bottom surface to the outer wall stood on the outer periphery of the bottom surface. As mentioned above, after producing the dish-shaped tray, which has no opening and is easily molded, the tray is continuously cut out from the outer wall portion to the bottom surface, so that the opening can be easily formed on the bottom surface. Thus, it is preferable.

In the keeper tray corresponding to the removable keeper according to the present invention, the opening is formed on the bottom surface. The opening opens to the space by cutting out from the outer peripheral portion of the bottom surface to the center portion with a predetermined width. Then, a state, in which the upper surface of a plate-shaped mold and the inner surface of the bottom surface of the keeper tray corresponding to the removable keeper are flushed, is made at the opening of the keeper tray corresponding to the removal keeper. In this state, the keeper tray corresponding to the removable keeper is putted on the setting position of the keeper on the wax piled on the gypsum model. Further, wax is piled more on the keeper tray corresponding to the removable keeper, so that the wax model of the root cap is formed. With this processing, the insertion path for inserting the thin rod-shaped tool can be secured by the plate-shaped mold or the like. Further, the root cap can be easily produced so as to make the back surface of the keeper to be exactly positioned on the upper surface of the insertion path. The operator inserts the thin rod-shaped tool into the insertion path formed by the above processing, and lifts the keeper from the back surface side, so that the operator can easily remove the keeper without any damages to the root cap.

Further, the embodiment in which an outer wall opening opens to the space is formed by continuously cutting out from the end portion of the opening portion on the outer peripheral side of the bottom surface to the outer wall portion stood on the outer periphery of the bottom surface, is as follows. That is, after producing the dish-shaped tray having no opening and easy molded, the opening can be easily formed by continuously cutting out from the outer wall portion to the bottom surface, so that it is preferable.
Fig. 1 is a perspective view illustrating an exemplary embodiment of a keeper tray corresponding to a removable keeper, which is made of a synthetic resin, according to the present invention.
Fig. 2 is a perspective view illustrating the state in which a plate-shaped mold is attached to the keeper tray corresponding to the removable keeper, which is made of a synthetic resin, according to Fig. 1.
Fig. 3 is a cross-sectional view cut along a line A-A in Fig. 2.
Fig. 4 is a perspective view illustrating another exemplary embodiment of a keeper tray corresponding to the removable keeper according to the present invention.
Fig. 5 is a cross-sectional explanatory view illustrating a gypsum model made by performing impression sampling in an oral cavity of a patient.
Fig. 6 is a cross-sectional explanatory view illustrating a state in which the keeper tray corresponding to the removable keeper, which is made of a synthetic resin according to Fig. 1, is putted on a setting position of a keeper on the wax piled on a gypsum model. A plate-shaped mold member is attached to an opening of the keeper tray corresponding to the removable keeper so as to become a state, in which the upper surface of the plate-shaped mold member and the inner surface of the bottom surface of the keeper tray are flushed.
Fig. 7 is a cross-sectional explanatory view illustrating a state in which a wax model of a root cap is produced by piling wax more from the state in Fig. 6.
Fig. 8 is a cross-sectional explanatory view illustrating a state in which the plate-shaped mold member is pulled out from the state in Fig. 7.
Fig. 9 is a cross-sectional reference view illustrating a state in which the gypsum model and the wax model of the root cap in the state in Fig. 8 are covered with an investment material.
Fig. 10 is a cross-sectional reference view illustrating a state in which the keeper tray corresponding to the removable keeper, which is made of a synthetic resin, according to the present invention and the wax model are burned and vaporized from the state in Fig. 9.
Fig. 11 is a cross-sectional reference view illustrating a state in which the wax model of the root cap, which includes the keeper tray corresponding to the removable keeper, which is made of a metal, according to the present invention and the gypsum model are covered with the investment material, and then burned, so that only the wax portion of the wax model of the root cap is burned and vaporized.
Fig. 12 is a front view illustrating the root cap casted by using the keeper tray corresponding to the removable keeper, which is made of a synthetic resin or a metal, according to the present invention.
Fig. 13 is a plane view of the root cap illustrated in Fig. 12.
Fig. 14 is a thin rod-shaped tool for lifting the keeper from the back surface side of the keeper.
Fig. 15 is an explanatory schematic view illustrating a using method of the thin rod-shaped tool in Fig. 14.
Fig. 16 is an explanatory schematic view illustrating a state removing the keeper adherently fixed on the root cap by the thin rod-shaped tool in Fig. 14.

The keeper tray corresponding to the removable keeper according to the present invention will be described, referring to figures as follows.

A shape of a keeper K is not limited if the magnetic attractive force is not impaired as a magnetic attachment, and a conventional shape, such as a disk, or the like, can be preferably used. Further, the keeper K is inserted in a space S and adhesively fixed. A root cap R has the space S in which the keeper K is inserted and adhesively fixed. The present invention is a keeper tray corresponding to a removable keeper, which is made of a synthetic resin or a metal. The keeper tray is used for casting the root cap R by the lost wax method and has the space S inside thereof.

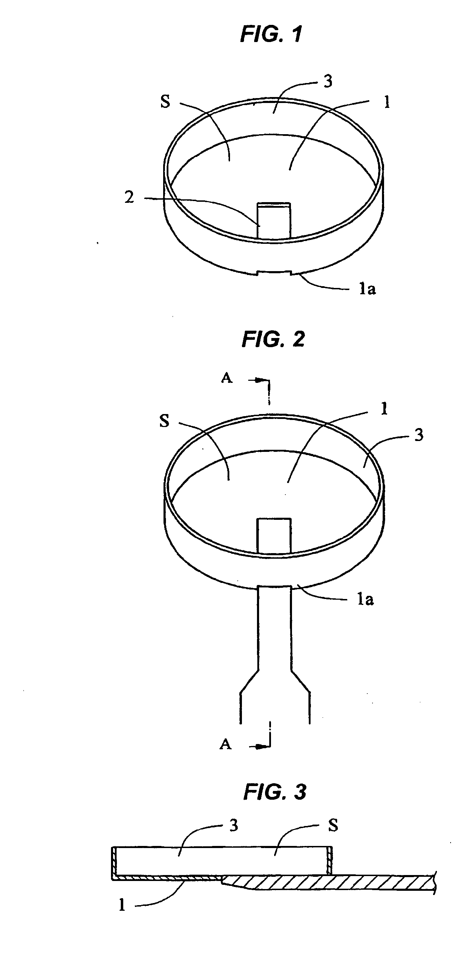

The space S includes a bottom surface 1 and an opening 2 formed by cutting out the bottom surface 1 from an outer peripheral portion 1 a to a center portion with predetermined width and opens to the space S. After producing a dish-shaped tray, which has not the opening and is easy to be molded, the opening 2 can be formed by cutting out the bottom surface 1, avoiding an outer wall portion stood on an outer periphery of the bottom surface 1. Further, as illustrated in Fig. 3, a plate-shaped mold is attached to the opening 2 so as to have a state in which the upper surface of the plate-shaped mold and the inner surface of the bottom surface 1 of the keeper tray corresponding to the removable keeper are flushed. In this state, the keeper tray corresponding to the removable keeper is putted on a setting position of the keeper on the wax piled on the gypsum model. After piling wax more to form the wax model of the root cap, the plate-shaped mold is pulled out, so that the insertion path for inserting the thin rod-shaped tool for removing the keeper K can be secured. In addition to this, the root cap R can be produced so as to make the back surface of the keeper K to exactly position to the upper surface of the insertion path.

An outer wall portion 3 is stood on the outer periphery of the bottom surface 1. An outer wall opening 4 is formed by cutting out from the end of the opening 2 on the outer peripheral portion 1 a side of the bottom surface 1 to the outer wall portion 3, and opens to the space S. The keeper tray corresponding to a removable keeper having the outer wall opening 4 can be produced as following steps. That is, after producing a dish-shaped tray which has not an opening and is easy to be molded, the tray is continuously cut out from the outer wall portion 3 to the bottom surface 1. By cutting out the outer wall portion 3, which becomes an obstacle in cutting out the bottom surface 1, together with the bottom surface 1, the opening 2 can be easily formed in the bottom surface 1, so that it is preferable.

For actually producing such a keeper tray corresponding to the removable keeper according to the present invention, the following processes are considered. At first, when the keeper tray corresponding to the removable keeper is made of a synthetic resin, the keeper tray is molded by press molding or injection molding, to a state in which the bottom surface 1 and the outer wall portion 3 are integrally molded. As for a synthetic resin to be use, the resin is not limited if the resin is easily burned and vaporized with wax at a time of casting the root cap. For example, soft polyethylene such as, polymethylmethacrylate (PMMA), polypropylene (PP), high pressure-low density polyethylene (HPLDPE), very low density polyethylene (VLDPE), and linear low density polyethylene (LLDPE), middle density polyethylene (MDPE), high density polyethylene (HDPE), ethylene-vinylalcohol copolymer (PVOH), ethylene-vinyl acetate copolymer (EVA), ethylene group ionomer, and the like, can be used.

Further, at a time of directly producing the keeper tray corresponding to the removable keeper, which is made of a synthetic resin and has the opening 2, by the press molding or the injection molding, since the diameter of the bottom surface is very small, for example, a few mm, it may be very difficult to mold the opening 2 on the such small bottom surface of the tray by the press molding or the injection molding. In such a case, a dish-shaped tray made of a synthetic resin, which has no opening 2 and is easily molded, is molded beforehand, and then only the bottom surface 1 is cut out avoiding the outer wall portion stood at the outer periphery of the bottom surface 1. As another method, if not only the bottom surface 1 but also the outer wall portion, which becomes an obstacle at a time of cutting, is cut out, the keeper tray made of a synthetic resin corresponding to the removable keeper can be easily produced.

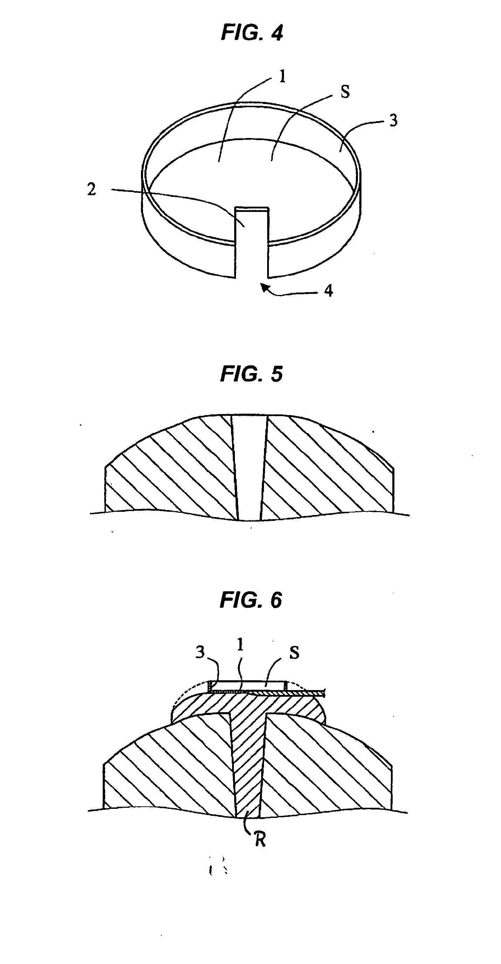

When the keeper tray corresponding to the removal keeper, which is made of a synthetic resin, according to the present invention is actually used for casting the root cap R, at first, an operator produces a gypsum model imitating an intraoral shape based on an impression extracted from a patient as illustrated in Fig. 5. Then the operator piles up the wax on the gypsum model and forms the wax model of the root cap R until the planned height in which the keeper K is provided, as illustrated in Fig. 6.

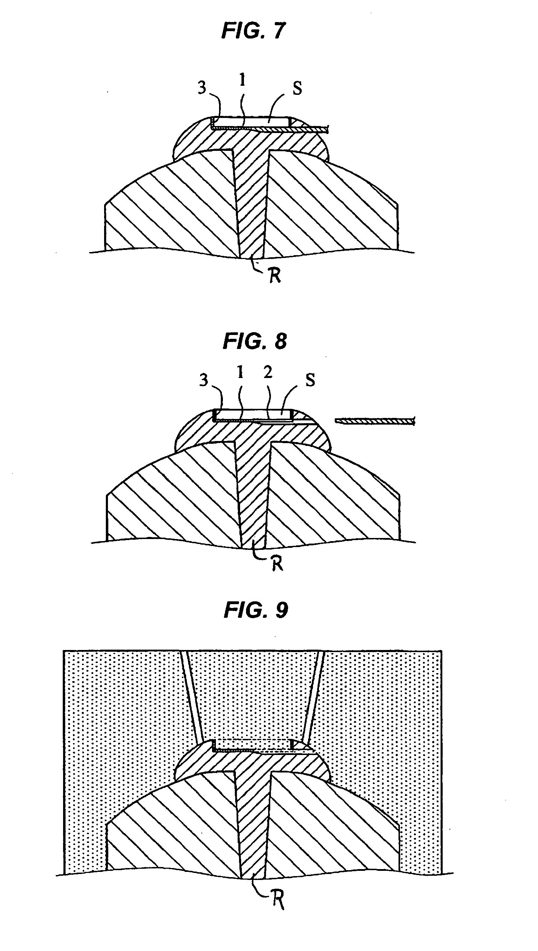

On the other hand, the operator inserts the plate-shaped mold to the opening 2 of the keeper tray corresponding to the removable keeper, which is made of a synthetic resin, according to the present invention so as to have the state, in which the upper surface of the plate-shaped mold and the inner surface of the bottom surface 1 are flushed. Here, the plate-shaped mold is entirely coated by a separating agent and keeper tray corresponding to the removable keeper, which is made of a synthetic resin, is made by the above steps. In this state, the operator puts the above keeper tray on the setting position of the keeper on the wax, which is piled on the gypsum model until the middle, and piles more the wax to complete the wax model of the root cap R (refer to Fig. 7).

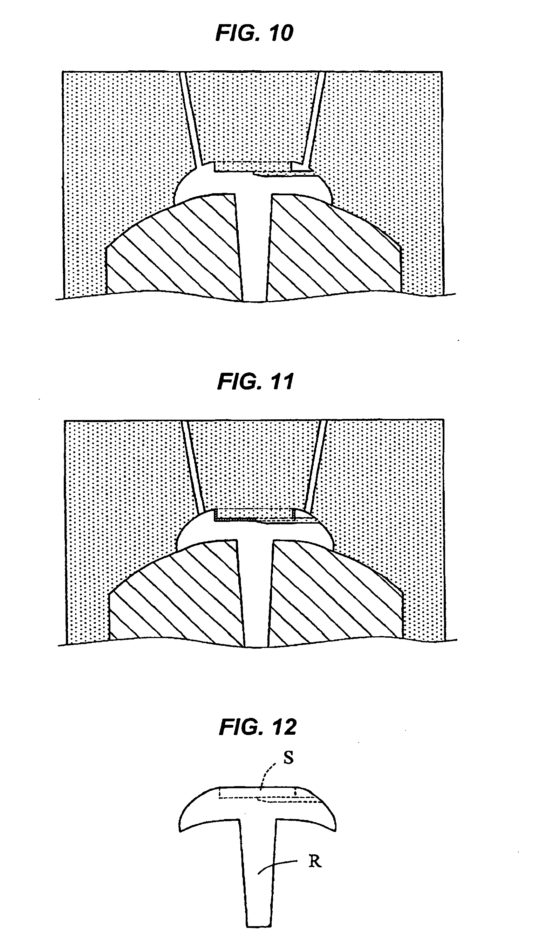

Then, the operator pulls out the plate-shaped mold from the completed wax model of the root cap R (refer to Fig. 8), covers the gypsum model and the wax model of the root cap R with an investment material, and cures the investment material (refer to Fig. 9). Further, the operator bums and vaporizes the keeper tray corresponding to the removable keeper, which is made of a synthetic resin, according to the present invention and the wax model, and forms the space for casting, so that the casting mold of the root cap R is completed (refer to Fig. 10). The operator pours a molten metal into the space for casting to cast the root cap R.

When a keeper tray made of a metal is used as the keeper tray corresponding to the removable keeper, as a suitable used metal, if the metal is a non-magnetic metal, has corrosion resistance, and is harmless to human body, the metal is not limited. For example, austenite stainless steel, a palladium alloy, titanium, a titanium alloy, and a gold alloy can be used. The operator can use and mold such metals by casting, pressing, cutting, or the like, into a dish-shaped tray in which the bottom surface 1 and the outer wall portion 3 are integrally molded. Then, the operator can cut out only the bottom surface 1 avoiding the outer wall portion 3 stood on the outer periphery of the bottom surface 1, or cut out together not only the bottom surface 1 but also the outer wall portion 3 becoming an obstacle for cutting.

When the keeper tray corresponding to the removal keeper, which is made of a metal, according to the present invention is actually used for casting the root cap R, the following process is carried out. That is, an operator produces a gypsum model imitating an intraoral shape based on an impression extracted from a patient as illustrated in Fig. 5, similar to the case of the above the keeper tray made of a synthetic resin. Then the operator inserts the plate-shaped mold to the opening 2 of the keeper tray corresponding to the removable keeper, which is made of a metal, so as to have the state, in which the upper surface of the plate-shaped mold and the inner surface of the bottom surface 1 are flushed. Here, the plate-shaped mold is entirely coated by a separating agent. In this state, the operator puts the above keeper tray on the setting position of the keeper on the wax, and completes the wax model of the root cap R. Then, the operator pulls out the plate-shaped mold from the completed wax model of the root cap R, covers the gypsum model and the wax model with the investment material, and cures the investment material.

At this time, in a case of the keeper tray corresponding to the removable keeper, which is made of a metal, the keeper tray made of a metal is different from the keeper tray made of a synthetic resin and has higher melting point. Thus, when the wax model is burned, only the wax part in the wax model is burned and vaporized, so that the keeper tray made of a metal corresponding to the removable keeper is remained in the casting mold of the root cap R (refer to Fig. 11). In a case that the keeper tray corresponding to the removable keeper, which is made of a metal, if the operator pours the molten metal into the casting mold in the state in which the keeper tray is remained, the keeper tray corresponding to a removable keeper, which is made of a metal, is intact and only the other part of the root cap R is newly molded by casting. If the operator pours the molten metal of high temperature, the keeper tray corresponding to a removable keeper, which is made of a metal, is once melted, and the entirety of the root cap is newly casted.

For using the root cap R obtained from the keeper tray corresponding to the removable keeper, which is made of a synthetic resin or a metal, in the actual treatment, at first, the operator adherently fixes the keeper K having a conventional shape, for example, a disk shape, in the space S in the casted root cap R by an adhesive, such as, a dental metal adhesive resin or dental cement. At this time, if the adhesive is filled also in the insertion path formed by the plate-shaped mold and is solidified, and a composite resin, or the like, is filled so as to be closed the insertion path from the side of the root cap R of the insertion path and is cured, mixing of a foreign matter into the insertion path in everyday life can be prevented. In addition, the strength of the root cap R is not lost. Further, since a part of the bottom surface 1 becomes the insertion path, the contact area of the root cap with the keeper K becomes small, so that the adhesion may be insufficient. However, the adhesive is filled enough in the insertion path positioning at a part opposite to the keeper K and being a lost area of the bottom surface 1, so that the adhesion strength between the root cap R and the keeper K is not lost.

When the keeper K fixed to the root cap R by the above processes is removed, for example, at a time of MRI diagnosis, it is necessary at first to scrape out and remove the composite or the adhesive filled in the insertion path. At this time, the insertion path has an enough width because the path is formed by the plate-shaped mold, so that it is easy to scrape out by using the rod-shaped scraping tool, or the like.

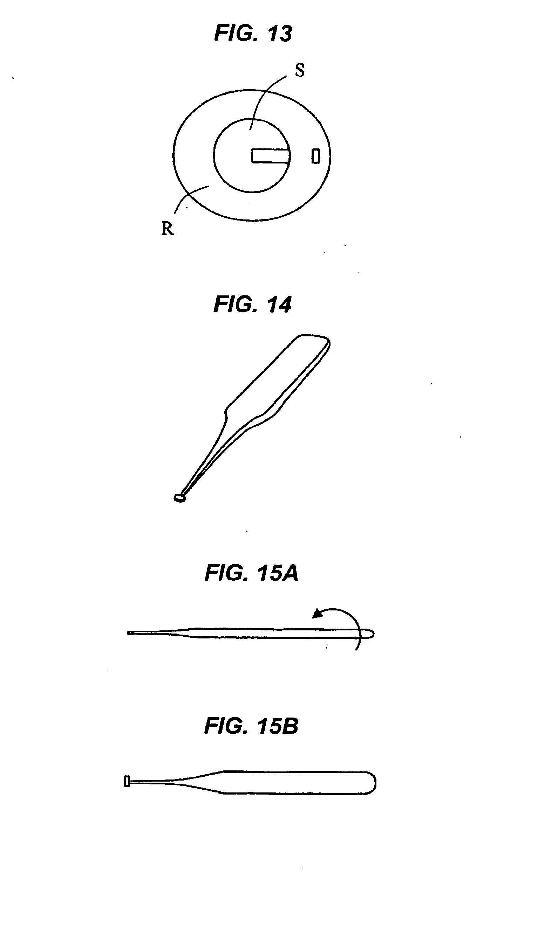

Then, as the rod-shaped tool for inserting in the insertion path and removing the keeper K, a crown remover, or the like can be used. The hook type of the crown remover having a sharpened end is not good for use. For example, as illustrated in Fig. 14, when the crown remover having a rectangular solid projection portion at the top end (product name is WAM key crown remover, produced by Medin A.S or YOSHIDA DENTAL MFG.CO.LTD.) is used, the keeper K can be easily removed without damaging the root cap R.

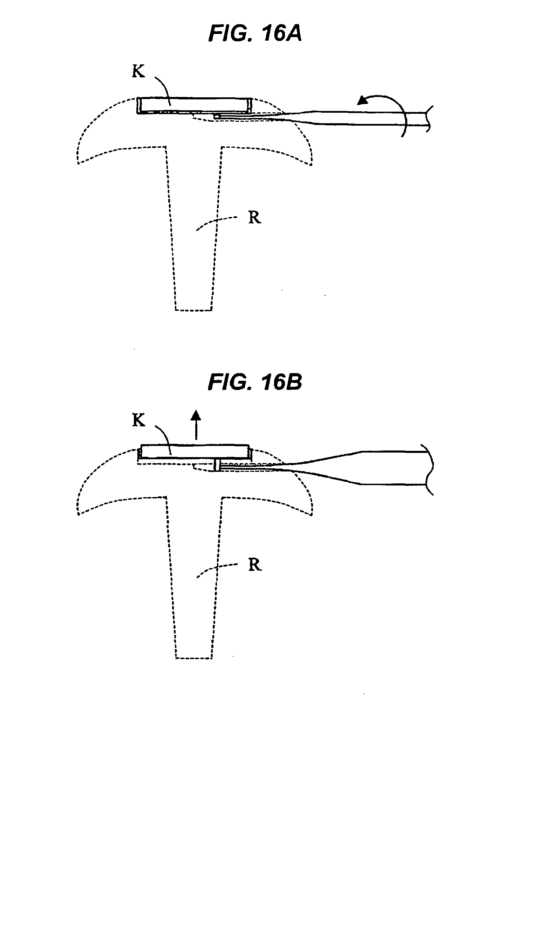

By rotating the crown remover 90 degrees from the state in Fig. 15 (a), the rectangular solid portion at the top end becomes the state vertically rearranged as illustrated in Fig. 15 (b). By using such a crown remover, the operator inserts the crown remover in the insertion path, in which the adhesive is scraped, so as to have the state in Fig. 16 (a). Then, the operator grasps the handle of the crown remover having a large diameter and rotates 90 degrees, so that the enough strength is applied to the top end side having a small diameter. Thus, the adhered keeper K is pushed up by the rectangular solid projection in the top end side as illustrated in Fig. 16 (b), so that the keeper K can be easily removed without damaging the root cap R, or the like.

Further, since not only the root cap R but also the keeper K can be removed without being damaged, the keeper K removed after MRI diagnosis can be used by washing and adhering again with the adhesive.

## Claims

1. A keeper tray corresponding to a removable keeper used at a time of casting a root cap (R) for a dental magnetic attachment by a lost wax method, wherein the root cap (R) having a space (S) in which a dental keeper (K) is inserted and adherently fixed,
wherein the space (S) is formed on the keeper tray corresponding to the removable keeper, and wherein the keeper tray corresponding to the removable keeper is made of a synthetic resin or a metal,
wherein an opening (2) is formed at a bottom surface (1) by cutting out from an outer peripheral portion (1 a) to a center portion with a predetermined width, and opens to the space (S).

2. The keeper tray corresponding to the removable keeper according to claim 1,
wherein an outer wall opening (4) is formed by continuously cutting out from an end portion of the opening (2) in the outer peripheral portion (1a) side of the bottom surface (1) to an outer wall portion (3) stood on the outer periphery of the bottom surface (1), and opens to the space (S).

## Patentansprüche

1. Verankerungseinsatz, der zu einer entfernbaren Verankerung gehört, die zu einer Zeit des Gießens einer Wurzelkappe (R) für eine magnetische Zahnbefestigung durch ein Wachsausschmelzfeingussverfahren verwendet wird, wobei die Wurzelkappe (R) einen Raum (S) hat, in den eine Zahnverankerung (K) eingesetzt wird und mit Klebstoff fixiert wird,
wobei der Raum (S) auf dem Verankerungseinsatz entsprechend der entfernbaren Verankerung ausgebildet wird und wobei der Verankerungseinsatz, der der entfernbaren Verankerung entspricht, aus synthetischem Harz oder einem Metall gefertigt ist,
wobei durch Ausschneiden von einem äußeren Umfangsabschnitt (1 a) zu einem mittleren Abschnitt eine Öffnung (2) an einer unteren Fläche (1) mit einer vorgegebenen Breite ausgebildet ist und sich zu dem Raum (S) öffnet.

2. Verankerungseinsatz, der zu der entfernbaren Verankerung gehört, nach Anspruch 1,
wobei eine äußere Wandöffnung (4) ausgebildet ist, indem kontinuierlich von einem Endabschnitt der Öffnung (2) in der Seite des Außenumfangsabschnitts (1 a) der unteren Fläche (1) zu einem Außenwandabschnitt (3), der auf dem Außenumfang der unteren Fläche (1) steht, ausgeschnitten ist, und sie sich zu dem Raum (S) öffnet.

## Revendications

1. Porte-empreinte d'armature correspondant à une armature amovible utilisé à un moment de couler une coiffe (R) pour un attachement magnétique dentaire par un procédé à la cire perdue, dans lequel la coiffe (R) ayant un espace (S) dans lequel une armature dentaire (K) est insérée et fixée de manière adhérente,
dans lequel l'espace (S) est formé sur le porte-empreinte d'armature correspondant à l'armature amovible et dans lequel le porte-empreinte d'armature correspondant à l'armature amovible est constitué d'une résine synthétique ou d'un métal,
dans lequel une ouverture (2) est formée au niveau d'une surface inférieure (1) en découpant d'une portion périphérique externe (1a) vers une portion centrale avec une largeur prédéterminée et s'ouvre vers l'espace (S).

2. Porte-empreinte d'armature correspondant à l'armature amovible selon la revendication 1,
dans lequel une ouverture de paroi externe (4) est formée en découpant en continu d'une portion d'extrémité de l'ouverture (2) dans le côté de portion périphérique externe (1a) de la surface inférieure (1) vers une portion de paroi externe (3) érigée sur la périphérie externe de la surface inférieure (1) et s'ouvre vers l'espace (S).
